# EUROPÄISCHE PATENTANMELDUNG

(11) **EP 1 207 369 A1**
(43) Veröffentlichungstag der Anmeldung: **22.05.2002**
(21) Anmeldenummer: 00124350.0
(22) Anmeldetag: 17.11.2000
(51) Int. Cl.: G01C 15/10

(54) **Sensorträger zur Durchführung zentrierter Aufstellungen**

(71) Anmelder: Leica Geosystems AG, 9435 Heerbrugg (CH)
(72) Erfinder: Schwärzler, Johannes Gallus, Dipl.-Ing., 6923 Lauterach (AT); Graf, Daniel, 9443 Widnau (CH)
(74) Vertreter: Kaminski, Susanne, Dr.

(57) **Zusammenfassung**

Der Sensorträger (47) zur Durchführung zentrierter Aufstellungen über respektive unter einem definierten Punkt auf einer mit Stellschrauben (17a, 17b, 17c) versehenen, horizontal ausrichtbaren Plattform (1) eines geodätischen Instrumentenstativs weist ein Gehäuse mit gegebenenfalls zueinander parallel ausgerichteten, in eine Aufnahme der Plattform passende Deckflächen und ein mit den Deckflächen starr verbundenes optisches Mittel zum Sichtbarmachen eines Schnittpunktes der optischen Achse des optischen Mittels mit einer Referenzfläche auf. Die korrekte Einbaulage des optischen Mittels kann auch im Feldeinsatz leicht verifiziert werden. Zusätzlich kann der Sensorträger speziell angeordnete Röhrenlibellen (36a, 36b, 36c) aufweisen, die eine horizontale Ausrichtung erleichtern und eine einfache Verifizierung der korrekten Einbaulage der Röhrenlibellen (36a, 36b, 36c) ermöglichen.

## Beschreibung

Die Erfindung bezieht sich auf einen Träger für, insbesondere geodätische, Sensoren nach dem Oberbegriff des Anspruchs 1 bzw. eine Vorrichtung nach dem Oberbegriff des Anspruchs 8. Solche Sensorträger zeichnen sich dadurch aus, dass mit ihrer Hilfe eine zentrierte Aufstellung vorgenommen werden kann.

Bei vielen Vermessungsaufgaben ist es notwendig, das definierte Messzentrum verschiedener geodätischer Sensoren, wie z.B. GPS-Antennen, Reflektoren, Zieltafeln, Winkelmesser, Distanzmesser oder Zieloptiken, entlang der Lotlinie durch einen definierten Punkt (Vermarkungspunkt, Basispunkt, oder geodätischer Fixpunkt) stationär zu positionieren. Hierfür muss ein horizontierter Dreifuss zentrisch zur Lotlinie auf einem Stativ fixiert und das definierte Messzentrum des Sensors mittels des Sensorträgers zentrisch und in einem bestimmten vertikalen Abstand zum Dreifuss sicher gehalten werden. Solche Sensorträger weisen beispielsweise neben einem Zentrierflansch, passend in die Aufnahmebohrung des Dreifusses, einem Stehbolzen, passend in die Aufnahmebohrung des Sensor, auch noch am Zentrierflansch angebrachte Verriegelungselemente auf, welche im Zusammenspiel mit einer lösbaren Verriegelungsmechanik des Dreifusses mit diesem eine starre Verbindung ermöglichen.

An der Anzugsschraube, durch welche der Dreifuss auf dem Stativ fixiert wird, befestigte Schnurlote oder Lotstäbe sind bekannte Lösungen für eine zentrierte Aufstellung. Mit optischen Einrichtungen, wie z.B. einem Laserkollimator oder einem Fernrohr mit Fadenkreuz, die den Schnittpunkt deren optischer Achse mit einer Fläche sichtbar machen, lassen sich Aufstellungen mit höheren Zentriergenauigkeiten erzielen, falls diese optische Achse auch mit der Lotlinie durch das Messzentrum des Sensors zusammenfällt. Neben einer geometrisch korrekten Aussenform des Sensorträgers mit der korrekten Form und Lage der Gegenstücke für die oben erwähnten Aufnahmen sind dafür vor allem die korrekt justierten Einbaulagen der optischen Einrichtung und einer Vorrichtung zum Horizontieren des Dreifusses entscheidend. Diese korrekten Einbaujustierungen können durch die im praktischen Einsatz sowie beim Transport auftretenden Vibrationen, Stossbelastungen und Temperaturschwankungen verloren gehen. Die Durchführung zuverlässiger, zentrierter Aufstellungen erfordert daher regelmässige Verifikationen der Einbaujustierungen bei diesen Sensorträgern mit optischen Einrichtungen. Diese Geräte haben sich in der Praxis bewährt und werden in verschiedenen Varianten für zentrierte Aufstellungen von Sensoren eingesetzt.

Mit Hilfe autonomer Spezialgeräte, sogenannter Nadir- oder Zenitlote, die neben der optischen Einrichtung in der Regel auch eine hochauflösende Röhrenlibelle aufweisen, kann ein Dreifuss auf einem Stativ horizontiert und flexibel über oder unter einem definierten Punkt zentriert aufgestellt werden. Das Spezialgerät wird dann mit einem Träger ausgetauscht, auf welchem der Sensor zentriert befestigt wird. Dieses Vorgehen wird vor allem bei zentrierten Aufstellungen unter definierten Punkten, sogenannten Firstpunkten, angewendet. Für das zentrierte Aufstellen von Sensoren über einem Bodenpunkt ist dieses Vorgehen im Vergleich zu den vorhandenen Alternativen umständlich und daher nicht üblich.

Wird die optische Einrichtung in einem Dreifuss integriert, so sind zentrierte Aufstellungen über einem Bodenpunkt auch ohne spezielle Lotgeräte möglich. Die für die geforderte Zuverlässigkeit geodätischer Anwendungen notwendige regelmässige Verifikation der korrekten Einbaujustierung der optischen Einrichtung des Dreifusses ist aber bei solchen Dreifüssen umständlich und erfordert ein Spezialwerkzeug, mit dem es möglich ist, den Dreifuss um die Achse seiner Aufnahmebohrung zu drehen und zwischen den Drehungen den Schnittpunkt der optischen Achse mit einer Fläche zu beobachten.

Eine weitere Variante ist die Integration der optischen Einrichtung im Sensorträger. Da bei dieser Variante der Zentrierflansch relativ zu den anderen Teilen des Sensorträgers drehbar gelagert ist, spricht man bei dieser Variante von drehbaren Sensorträgern. Durch Drehen des Sensorträgers und Beobachten des Schnittpunktes der optischen Achse mit einer Fläche ist eine einfache Verifizierung der Einbaujustierung in einem aufgestellten Dreifuss möglich. In der Regel weist ein drehbarer Sensorträger für die Durchführung genauer Zentrierungen eine Röhrenlibelle mit hoher Genauigkeitsauflösung auf. Da auch sie relativ zum Zentrierflansch drehbar gelagert ist, kann durch eine ebene Drehung des Sensorträgers um 180° ihre Einbaujustierung verifiziert werden. Die Anforderungen geodätischer Anwendungen bezüglich Genauigkeit und Stabilität erfordern aber eine entsprechend aufwendige Gestaltung und Herstellung drehbarer Sensorträger. Zudem beeinträchtigen mögliche Verschmutzungen der sich gegeneinander bewegenden Gleitlagerflächen des Zentrierflansches und des Gehäuses des Sensorträgers die gewünschte Wartungsfreiheit sowie die erzielbare Zentriergenauigkeit drehbarer Sensorträger. Das Horizontieren eines Dreifusses durch einen solchen Sensorträger mit nur einer Röhrenlibelle erfordert zudem mehrere Arbeitsschritte, zwischen denen der Sensorträger zweckmässigerweise um möglichst genau 90° gedreht werden sollte.

Die Aufgabe der Erfindung besteht darin, einen eingangs genannten Sensorträger anzugeben, der einfache zentrierte Aufstellungen über oder unter definierten Punkten ermöglicht, welcher trotz seiner einfachen Konstruktion eine einfache Verifikation der Einbaujustierung seiner optischen Einrichtung sowie seiner allenfalls aufweisenden Röhrenlibellen ermöglicht.

Diese Aufgabe wird durch die Verwirklichung der kennzeichnenden Merkmale der Ansprüche 1 bzw. 8 gelöst.

Vorteilhafte bzw. alternative Lösungen sind in den Kennzeichen der abhängigen Ansprüche beschrieben.

Bei einem erfindungsgemässen Sensorträger werden bzw. sind grundsätzlich alle für die Durchführung einer zentrierten Aufstellung in einer Aufnahmebohrung eines Dreifusses relevanten Bauteile, wie z.B. die optische Einrichtung zum Sichtbarmachen eines Geradenschnittpunktes, das Gegenstück für das Aufnahmeelement des Dreifusses und gegebenenfalls die Gravitationssensoren, starr miteinander verbunden, was neben den Herstellkosten, das Gewicht und die Anzahl der Teile reduziert und zudem die Robustheit steigert. Als starr verbunden bzw. verbindbar im Sinne der vorliegenden Erfindung soll verstanden werden, dass ein Lösen bzw. Herstellen einer derartigen starren Verbindung nicht selbsttätig, oder beim normalen Gebrauch erfolgen kann. Eine Verifikation der korrekten Einbaujustierung der optischen Einrichtung ist wie bei einem aus dem Stand der Technik bekannten, drehbaren Träger im Feldeinsatz auch ohne Spezialwerkzeug möglich.

Das Aufnahmeelement des Dreifusses sowie das entsprechende Gegenstück des Sensorträgers müssen aber nicht zwangsläufig eine zylindrische Form aufweisen. Grundsätzlich sind dafür neben beispielsweise quaderförmigen Formen auch Geometrien denkbar, welche es erlauben, den Sensorträger um eine durch ihn selbst verlaufende Achse gedreht in wenigstens zwei im wesentlichen eindeutig bestimmte Stellungen in bezug auf die und auf der Plattform festzustellen.

Eine als Gegenstück für das Aufnahmeelement der Plattform wirkende, erste Deckfläche und eine zweite, zur ersten parallel ausgerichtete Deckfläche müssen nicht zwangsläufig geschlossene, zusammenhängende oder ebene Flächen sein. Für eine erfindungsgemässe Funktion des Sensorträgers genügt es, dass die Deckflächen so gestaltet sind, dass Teile der Deckflächen mit der Oberfläche des Aufnahmeelementes der Plattform so zusammenwirken, dass der Sensorträger in jeder Stellung mit der Plattform zusammengefügt immer die gleiche durch ihn selbst verlaufende Achse aufweist.

Sind in der Seitenfläche eines im wesentlichen zylindrischen Sensorträgers Vertiefungen oder Einbuchtungen vorgesehen, z.B. Griffrillen für die Finger oder eine Griffmulde für die Hand, so wird die Handhabung des Trägers sicherer und auch mit Handschuhen durchführbar.

Unter Raumdecken, Vordächern, aufgeklappten Kofferraumdeckeln oder Fahrzeughimmeln sind Verifikationen der korrekten Einbaujustierung mit ungedrehten, in der Aufnahmebohrung eines Dreifusses drehenden, erfindungsgemässen Sensorträgern komfortabel möglich.

Da das Strahlbündel der optischen Einrichtung bei einem erfindungsgemässen Sensorträger in Verifikationsstellung nach oben zeigt, besitzt er dadurch auch die Funktionalität eines Zenitlotes. Zentrierte Aufstellungen unter einem Firstpunkt können daher auch ohne ein autonomes Zenitlotgerät vorgenommen werden.

Für Horizontierungen mit beschränkten Genauigkeiten braucht der erfindungsgemässe Träger keinen eigenen Gravitationssensor aufzuweisen. In dieser einfachsten Ausführung eines erfindungsgemässen Sensorträgers wird auf die Horizontierungsinformation der an Dreifüssen vorhandenen Dosenlibelle zurückgegriffen, was zusätzlich Herstellkosten spart.

Für zentrierte Aufstellungen mit hohen Genauigkeiten kann eine Vorrichtung mit wenigstens einer Röhrenlibelle eingesetzt werden, welche erfindungsgemäss parallel zu jeweils einer und nur einer durch die wenigstens drei Stellschraubenachsen eines Dreifusses aufgespannten Ebenen ausgerichtet ist. Je nach Anzahl der eingesetzten Röhrenlibellen kann der Komfort und die Schnelligkeit von Horizontierungen von Dreifüssen - mit gegebenenfalls darin verriegelten Sensorträgern - gegenüber dem Stand der Technik erheblich gesteigert werden, da das für eine Horizontierung notwendige, aus dem Stand der Technik bekannte, mehrmalige, möglichst genaue Ausrichten der Röhrenlibelle relativ zu den Stellschrauben eines Dreifusses nicht mehr notwendig ist. Auch eine einfache Verifikation der korrekten Einbaujustierung der Röhrenlibellen ist im Feldeinsatz möglich.

Weist eine solche Vorrichtung zwei erfindungsgemäss angeordnete Röhrenlibellen auf, kann das für eine Horizontierung notwendige, aus dem Stand der Technik bekannte, mehrmalige alternierende Drehen von Stellschrauben und gegebenenfalls des Sensorträgers durch ein zweimaliges, voneinander unabhängiges Drehen einer jeweils einer Röhrenlibelle zugeordneten Stellschraube ersetzt werden. Dies ermöglicht ein paralleles zielgerichtetes Drehen der Stellschrauben.

Weist eine solche Vorrichtung drei erfindungsgemäss angeordnete Röhrenlibellen auf, so ist jede durchgeführte gemeinsame Horizontierung zugleich auch eine Verifikation der korrekten Einbaujustierung der drei Röhrenlibellen. Da bei einer entsprechenden Bauausführung jeweils zwei Libellenblasen aus jeder Position rings um die Vorrichtung eingesehen werden können, kann die Horizontierung auch aus vielen Positionen rings um die Vorrichtung vorgenommen werden, ohne die Vorrichtung - wie beispielsweise bei einer drehbar gelagerten Röhrenlibelle - zuerst in die richtige Ausgangslage drehen zu müssen.

Da ein Dreifuss drei miteinander gekoppelte, zueinander nicht rechtwinklige Kippachsen aufweist, kann ein gezieltes Drehen der Stellschrauben für eine Horizontierung, basierend auf der kombiniert dargestellten, zweidimensionalen Horizontierungsinformation einer Dosenlibelle, für wenig geübte Anwender geodätischer Instrumente, z.B. Geologen, Archäologen, Forstingenieure und viele Anwender im Bauwesen, nicht offensichtlich sein. Durch die erfindungsgemässe Anordnung dreier Röhrenlibellen ist die Horizontierungsinformation so dargestellt, dass mit Hilfe von graphischen Symbolen einfache Handlungsanweisungen möglich werden, die es auch wenig geübten Anwendern erlauben, durch gezieltes Drehen der Stellschrauben Dreifüsse zu horizontieren. Weist ein Dreifuss relativ zu einer Horizontalebene grössere Kippwinkel auf, so befindet sich die Dosenlibelle ausserhalb ihres Arbeitsbereiches und kann nicht mehr auf Drehungen der Stellschrauben reagieren. Ohne eine Handlungsanweisung kann ein Drehen der Stellschrauben in die falsche Richtung vor allem von ungeübten Anwendern nicht gleich erkannt werden.

Es ist einsichtig, dass anstelle von Röhrenlibellen auch andere Anzeigemittel vorgesehen werden können, welche die Horizontierungsinformation von Plattformen mit mehr als zwei Kippachsen, wie z.B. geodätische Dreifüsse, in einer erfindungsgemässen Art und Weise darstellen. Bei einem Sensorträger mit elektronischem Gravitationssensor und graphikfähigem Display, wie z.B. einem Tachymeter, wäre es durchaus denkbar, dem Anwender die Horizontierungsinformation mittels der für eine Horizontierung notwendigen Drehungen, z.B. unter Angabe des Drehungwinkelwertes sowie der Drehrichtung, den jeweils betreffenden Stellmitteln zugeordnet, zur Verfügung zu stellen. Die erfindungsgemässe Art und Weise der Darstellung der Horizontierungsinformation ist nicht auf Plattformen von Sensorträgern beschränkt, sondern grundsätzlich bei allen auf mehreren Stellmitteln ruhenden Gegenständen denkbar, die mit diesen Stellmitteln horizontal ausrichtbar sind.

Die geometrischen Gegebenheiten einer erfindungsgemässen Anordnung - gegenüber einer dem Stand der Technik entsprechenden rechtwinkligen Anordnung der Röhrenlibellen - ermöglicht entweder eine grössere Libellenlänge, mit dem Vorteil einer besseren Genauigkeitsauflösung bei gleichbleibendem Arbeitsbereich, oder erlaubt konstruktiv einfachere Lösungen, da mehr Raum für Einbaujustiervorrichtungen der Röhrenlibellen vorhanden ist.

Nachfolgend wird die Erfindung rein beispielhaft anhand der in der Zeichnung dargestellten Figuren näher erläutert. Es zeigen:
- Figur 1a: einen erfindungsgemässen Sensorträger in Trägerstellung mit aufgesteckter GPS-Antenne in der Aufnahmebohrung eines im teilweisen Schnitt gezeigten Dreifusses auf einem teilweise dargestellten Stativ über einem Bodenpunkt in Seitenansicht;
- Figur 1b: den Sensorträger aus Figur 1a in Verifikationsstellung in der Aufnahmebohrung eines im teilweisen Schnitt gezeigten Dreifusses auf einem teilweise dargestellten Stativ unter einem Firstpunkt in Seitenansicht und
- Figur 2a,: 2b, 2c weitere Sensorträger mit Röhrenlibellen in einem Dreifuss verriegelt in Draufsicht.

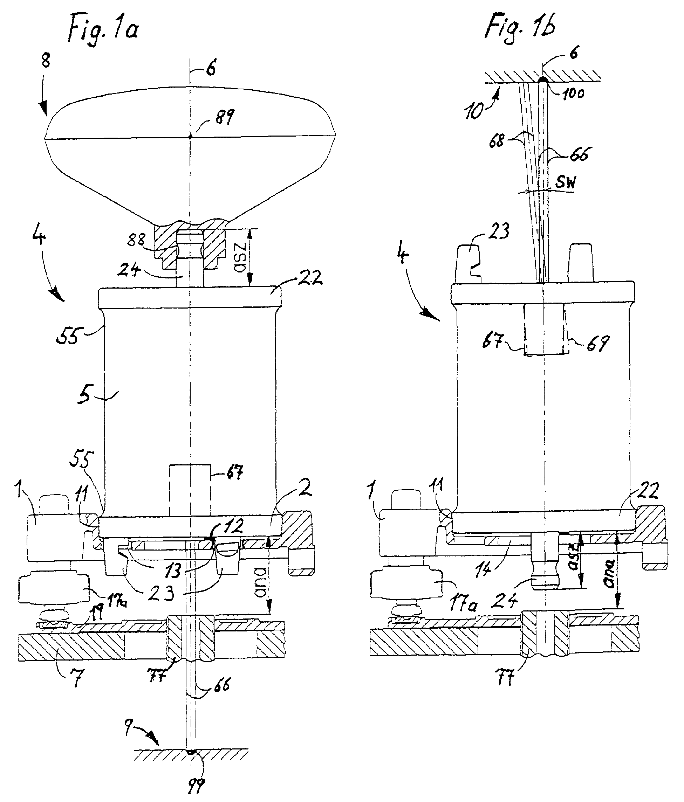

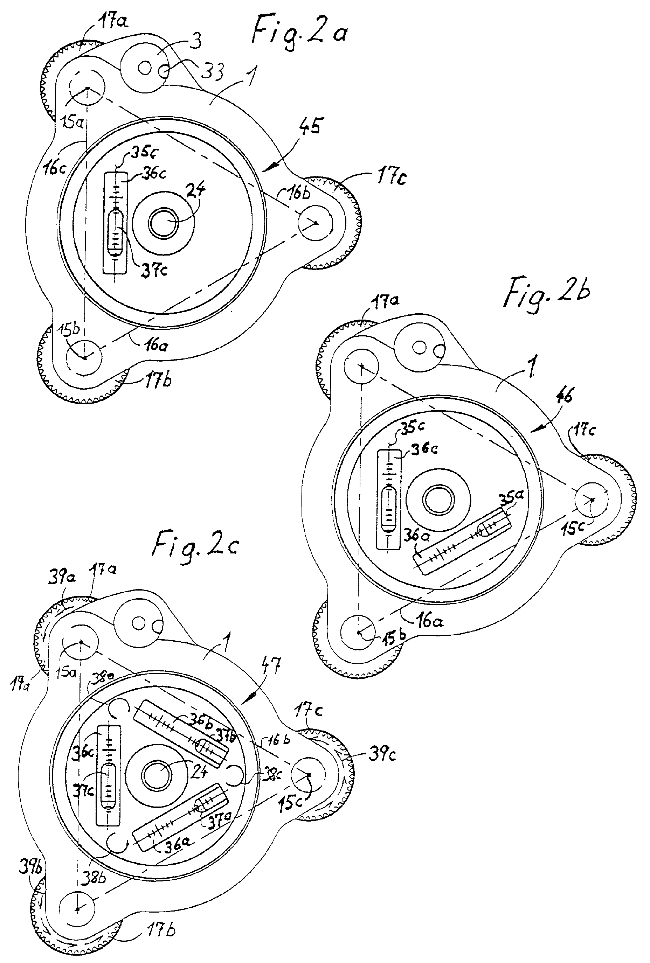

Die Figur 1a zeigt eine zentrierte Aufstellung eines geodätischen Sensors über einem definierten Punkt. Es sind eine GPS-Antenne 8, ein erfindungsgemässer Sensorträger 4 in Trägerstellung, ein Dreifuss 1, Teile eines Stativs und eine Bodenfläche 9 mit einem Bodenpunkt 99 dargestellt. Das Bodenteil der GPS-Antenne 8 weist ein Aufnahmeteil, z.B. eine Zylinderbohrung 88 mit einem Verriegelungsmechanismus (in Figur 1a nicht dargestellt) auf, deren Achse durch ein definiertes Messzentrum 89 verläuft. Der Sensorträger 4 besitzt beispielsweise ein im wesentlichen zylinderförmiges Gehäuse 5 mit einer Seitenfläche 55, deren Kontur durch Vertiefungen, z.B. durch Griffrillen für die Finger, für eine sicherere Handhabung des Sensorträgers 4 bestimmt sein kann. Ein erster Zentrierflansch 2 und ein im wesentlichen gleichbemasster, gleichgestalteter zweiter Zentrierflansch 22 bilden die beiden Deckflächen des Gehäuses 5. Im Gegensatz zu drehbaren Sensorträgern sind die beiden Zentrierflansche 2, 22 starr mit dem Gehäuse 5 verbunden. Im Gehäuse 5 ist eine optische Einrichtung starr eingebaut. Diese optische Einrichtung kann ein Fernrohr mit Strichplatte (bei optischen Loten) oder, wie in Figur 1a schematisch dargestellt, ein Laserkollimator 67 sein. Dieser projiziert ein sichtbares Strahlenbündel 66 mit einer optischen Achse 6 durch eine Fenster (in Figur 1a nicht dargestellt) im Zentrum des ersten Zentrierflansches 2. Eine dem Gehäuse 5 abgewandte Deckfläche des ersten Zentrierflansches 2 steht ebenfalls senkrecht auf die optischen Achse 6 und weist drei voneinander sowie zur optischen Achse 6 jeweils gleichmässig beabstandete Verriegelungselemente 23 auf. Die Achsen der umschliessenden Zylinder der Seitenflächen des ersten Zentrierflansches 2 und des zweiten Zentrierflansches 22 und die optische Achse 6 sind koaxial. Die dem Gehäuse 5 abgewandte Deckfläche des zweiten Zentrierflansches 22 steht senkrecht zur optischen Achse 6 und weist ein Aufnahmeteil für den Sensor, z.B. einen im wesentlichen zylindrischen Stehbolzen 24, auf, dessen Achse koaxial zur Verlängerung der optischen Achse 6 verläuft. Die Deckfläche des Stehbolzens 24 weist einen Abstand asz von der Deckfläche des zweiten Zentrierflansches 22 auf. Der Dreifuss 1 ist mittels dreier Stellschrauben 17a, 17b, 1 7c von denen in Figur 1a nur eine dargestellt ist (alle drei sind in den Figuren 2a, 2b, 2c dargestellt), auf der Dreifussplatte 19 befestigt. Ein Drehen der Stellschrauben 17a, 17b, 17c hat ein Kippen des Dreifusses 1 relativ zur Dreifussplatte zur Folge. Der Dreifuss 1 weist an der Oberseite eine im wesentliche zylindrische Aufnahmebohrung 11 auf. Die Grundfläche der Aufnahmebohrung 11 weist neben einer konzentrischen Zentralbohrung 14 auch noch drei voneinander sowie zur Achse der Aufnahmebohrung 11 jeweils gleichmässig beabstandete Öffnungen 13 auf. Die Grundfläche weist zudem drei plane Nocken 12 (in Figur 1a nur eine dargestellt) auf, welche jeweils neben den Öffnungen 13 in einer gemeinsamen Ebene senkrecht zur Achse der Aufnahmebohrung 11 liegen. Die Kippung dieser Ebene relativ zu einer Horizontalebene definiert beide Kippwinkel des Dreifusses 1. Auf der Bodenfläche 9 ist ein Stativ aufgestellt, von dem nur ein Teil des Stativtellers 7 und der Anzugsschraube 77 dargestellt ist. Diese weist eine durchgehende, zentrale Bohrung auf. In Trägerstellung ist der erste Zentrierflansch 2 in die Aufnahmebohrung 11 eingefügt. Da die Seitenfläche des ersten Zentrierflansches 2 und die Innenfläche der Aufnahmebohrung 11 ineinander zentrierend passen und die Deckfläche des ersten Zentrierflansches 2 auf den drei planen Nocken 12 aufliegt, fällt die optische Achse 6 mit der Achse der Aufnahmebohrung 11 zusammen. Die drei Verriegelungselemente 23 greifen durch die drei Öffnungen 13 hindurch und können mit einem am Dreifuss 1 befestigten Verriegelungsmechanismus (in der Fig. 1a nicht dargestellt) eine lösbar verriegelnde, formschlüssige Verbindung bilden. In der Zylinderbohrung 88 ist der Stehbolzen 24 bis zum Anschlag eingeschoben. Da die Seitenfläche des Stehbolzens 24 und die Innenfläche der Zylinderbohrung 88 ineinander zentrierend passen, verläuft die Verlängerung der optischen Achse 6 durch das definierte Messzentrum 89. Ein an der GPS-Antenne 8 befestigter Verriegelungsmechanismus (in der Fig. 1a nicht dargestellt) ermöglicht eine lösbare Verbindung mit dem Sensorträger 4. Durch ein entsprechendes Drehen der Stellschrauben 17a, 17b, 17c kann mit Hilfe der Horizontierungsinformation einer am Dreifuss 1 angebrachten Dosenlibelle 3 (in den Figuren 2a, 2b, 2c dargestellt) der Dreifuss horizontal ausgerichtet werden. Dadurch wird die optische Achse 6 zu einer Lotlinie des Dreifusses 1, des Sensorträgers 4 und des Messzentrums 89. Das Strahlbündels 66 projiziert durch die zentrale Bohrung der Anzugsschraube 77 hindurch einen Leuchtpunkt auf die Bodenfläche 9. Auf der dem Stativ abgewandten, planen Deckfläche des Stativtellers 7 kann die Dreifussplatte 19 und damit verbunden der Dreifuss 1, der Sensorträger 4 sowie der Sensor 8 so verschoben werden, dass der Leuchtpunkt mit dem Bodenpunkt 99 zur Deckung gebracht wird. Die Dreifussplatte 19 wird in dieser Stellung durch ein Anziehen der Anzugsschraube 77 auf dem Stativteller 7 reibfest fixiert. Die Ebene, welche durch die Oberkanten der planen Nocken 12 gegeben ist, weist einen Abstand ana zur Oberkante der Anzugsschraube 77 auf. Der Dreifuss 1, der Sensorträger 4 und die GPS-Antenne 8 sind jetzt zentriert über dem Bodenpunkt 99 aufgestellt. Die horizontalen Koordinaten des Bodenpunktes 99 weist nun auch die GPS-Antenne 8 auf, welche zudem mittels des Dreifusses 1, des Sensorträgers 4 mit ihren Verriegelungsmechanismen (in Figur 1a nicht dargestellt) und des Stativs mit der Bodenfläche 9 sicher und stabil verbunden ist.

In der in Fig. 1a gezeigten Anordnung kann die korrekte Einbaujustierung des Laserkollimators 67 auf folgende Weise verifiziert werden. Da der vom Laserkollimator 67 auf der Bodenfläche 9 projizierte Leuchtpunkt mit einem definierten Zielpunkt, z.B. dem Bodenpunkt 99, bereits zur Deckung gebracht worden ist, kann der zum Bodenpunkt 99 fixierte Dreifuss 1 entriegelt und der Sensorträger 4 um 120° umgesetzt werden. Für ein Umsetzen um 120° wird der Sensorträger 4 aus der Aufnahmebohrung 11 soweit herausgehoben, bis die Verriegelungselemente 23 die Öffnungen 23 sicher verlassen haben. Anschliessend wird der Sensorträger 4 um 120° um die optische Achse 6 gedreht und wieder in die Aufnahmebohrung 11 des Dreifusses 1 hineingeschoben. Die zwei Öffnungen 13, aus denen das jeweilige Verriegelungselement 23 zuerst herausgehoben und nach dem Drehen um 120° hineingeschoben wird, sind gegeneinander um 120° versetzt. Die durch die Öffnungen 13 hindurchgreifenden Verriegelungselemente 23 ermöglichen erneut im Zusammenspiel mit dem Verriegelungsmechanismus des Dreifusses eine formschlüssige, verriegelnde Verbindung. Deckt sich der durch den Laserkollimator 67 projizierte Leuchtpunkt auch nach dem Umsetzen um 120° mit dem Bodenpunkt 99, so ist damit die korrekte Einbaujustierung des Laserkollimators 67 verifiziert.

Die Figur 1b zeigt eine zentrierte Aufstellung unter einem definierten Punkt sowie ein Vorgehen für die Verifikation der korrekten Einbaujustierung des Laserkollimators 67, ohne ein Entriegeln, Umsetzen um 120° und Verriegeln des Sensorträgers 4 notwendig ist. Aus Figur 1b sind eine Deckenfläche 10 mit einem Firstpunkt 100 sowie der erfindungsgemässe Sensorträger 4 in Verifikationsstellung, der Dreifuss 1 und die Teile des Stativs aus Fig. 1a zu ersehen. Ausgehend von der Trägerstellung aus Figur 1a ist der Sensorträger 4 in einer Vertikalebene um 180° in die sogenannte Verifikationsstellung gedreht und mit dem zweiten Zentrierflansch 22 in die Aufnahmebohrung 11 des Dreifusses 1 zentrierend eingefügt. Da bei dieser Ausführungsform der Aussendurchmesser des Stehbolzens 24 wesentlich kleiner als der Innendurchmesser der Zentralbohrung 14 und der Abstand ana grösser als der Abstand asc ist, können beim Einfügen von Sensorträgern 4 in Verifikationsstellung in Dreifüsse 1 mögliche Kollisionen zwischen Stehbolzen 24 und der Anzugsschraube 77 oder dem Dreifuss 1 vermieden werden. Da die Seitenfläche des zweiten Zentrierflansches 22 und die Innenfläche der Aufnahmebohrung 11 ineinander zentrierend passen und die Deckfläche des zweiten Zentrierflansches 22 auf den drei planen Nocken 12 aufliegt, fällt die optische Achse 6 mit der Achse der Aufnahmebohrung 11 zusammen. Durch ein entsprechendes Drehen der Stellschrauben 17a, 17b, 17c kann mit Hilfe der Horizontierungsinformation einer am Dreifuss 1 angebrachten Dosenlibelle 3 (in den Figuren 2a, 2b, 2c dargestellt) der Dreifuss horizontal ausgerichtet werden. Dadurch wird die optische Achse 6 zur Lotlinie des Dreifusses 1 und des Sensorträgers 4. Das Strahlbündel 66 erzeugt einen Leuchtpunkt auf der Deckenfläche 10. Auf der dem Stativ abgewandten, planen Deckfläche des Stativtellers 7 kann die Dreifussplatte 19 und damit verbunden der Dreifuss 1 und der Sensorträger 4 so verschoben werden, dass der Leuchtpunkt mit dem definierten Firstpunkt 100 zur Deckung gebracht wird. Die Dreifussplatte 19 wird nun in dieser Stellung durch ein Anziehen der Anzugsschraube 77 auf dem Stativteller 7 reibfest fixiert. Der Dreifuss 1 und der Sensorträger 4 sind jetzt zentriert unter dem Firstpunkt 100 aufgestellt. Nun kann der Sensorträger 4 aus der Aufnahmebohrung 11 des zentrierten und horizontierten Dreifusses 1 herausgenommen, um 180°gedreht und in Trägerstellung wieder in den Dreifuss 1 eingefügt und verriegelt werden. Der Sensorträger 4 steht für zentrierte Aufnahmen eines Sensors entsprechend Figur 1a zur Verfügung, welcher dann ebenfalls die horizontalen Koordinaten des Firstpunktes 100 aufweist.

Wie aus Figur 1 b auch zu ersehen, kann aufgrund des zweiten Zentrierflansches 22 die korrekte Einbaujustierung des Laserkollimators 67 einfach und ohne einen relativ zum Laserkollimator drehbar gelagerten Zentrierflansch, wie aus dem Strand der Technik bekannt, verifiziert werden.

Diese Verifikationen sind für eine zuverlässige Durchführung zentrierter Aufstellungen regelmässig notwendig. Da der zweite Zentrierflansch 22 keine Verriegelungselemente 23 aufweist, kann der Träger 4 in Verifikationsstellung in der Aufnahmebohrung 11 um deren Achse gedreht werden. Da diese Achse bei einer korrekten Einbaujustierung des Laserkollimators 67 mit der optischen Achse 6 zusammenfällt, dreht sich die Projektion des Strahlbündels 66 auf der Deckenfläche 10 nicht wahrnehmbar seine eigene optische Achse 6.

Ist jedoch, wie in Figur 1b punktstrichliert dargestellt, im Gegensatz dazu ein Laserkollimator 69 nicht (mehr) korrekt justiert eingebaut, so sendet dieser ein Strahlbündel 68 aus, das die um einen Winkel sw unkorrekte Einbaudejustierung aufweist. Die optische Achse des Strahlbündels 68 steht weder senkrecht auf die Deckflächen der beiden Zentrierflansche 2,22 noch koaxial zur Achse des Stehbolzens 24. Wird nun der Sensorträger 4 mit dem dejustiert eingebauten Laserkollimator 69 in der Aufnahmebohrung 11 um deren Achse gedreht, so bewegt sich die Projektion des Strahlbündels 68 auf einer geschlossenen Bahn mit einem wahrnehmbaren Durchmesser auf der Deckenfläche 10. Die unkorrekte Einbaudejustierung des Laserkollimators 69 wird offensichtlich und unkorrekte, zentrierte Aufstellungen können verhindert werden.

Da im allgemeinen Dreifüsse eine Dosenlibelle für deren Horizontierung besitzen, benötigt ein erfindungsgemässer Sensorträger in seiner einfachsten Ausführung keine Libellen. Bedingt durch den geforderten Arbeitsbereich und ihre kompakte Bauform, weisen Dosenlibellen im allgemeinen relativ grobe Genauigkeitsauflösungen von üblicherweise sechs bis acht Winkelminuten je zwei Millimeter Blasenverschiebung auf. Zentrierte Aufstellungen mit hohen Genauigkeiten lassen sich deshalb mit derartig gestalteten Sensorträgern nicht erzielen. Da Röhrenlibellen üblicherweise die zehn- bis zwanzigfache Genauigkeitsauflösung von Dosenlibellen besitzen, können mit ihnen auch genaue zentrierte Aufstellungen durchgeführt werden.

Entsprechend sind in Figur 2a, 2b, 2c in einem Dreifuss 1 verriegelte, erfindungsgemässe Sensorträger 45, 46, 47 dargestellt. Der Dreifusses 1 weist eine Dosenlibelle 3 mit einer Libellenblase 33 auf. Die Exzentrizität der Libellenblase 33 stellt eine zweidimensionale Kippwinkelinformation kombiniert dar und ist in den Figuren 2a, 2b, 2c vergrössert dargestellt. Die Sensorträger 45, 46, 47 sind bis auf zusätzlich angebrachte Röhrenlibellen mit dem Sensorträger 4 aus der Figur 1a baugleich. Diese Röhrenlibellen sind an den Deckflächen des zweiten Zentrierflansches angeordnet.

Figur 2a zeigt einen im Dreifuss 1 verriegelten Sensorträger 45 in Draufsicht, mit einer Röhrenlibelle 36c, deren Libellenachse 35c vorteilhaft parallel zu einer Normalabstandslinie 16c zwischen den Schraubenachsen 15a, 15b einer ersten und zweiten Stellschraube 17a, 17b ausgerichtet ist und die seitlich des Stehbolzens 24 plaziert ist. Bei den in der Praxis vorkommenden Kippwinkeln von Dreifüssen 1, hat ein Drehen einer gegenüberliegenden dritten Stellschraube 17c keine wahrnehmbare Auswirkung auf die Exzentrizität der Libellenblase 37c der Röhrenlibelle 36c, deren Libellenachse 35c parallel zur Normalabstandslinie 16c ausgerichtet ist. Durch Drehen der ersten zwei Stellschrauben 17a, 17b kann der Dreifuss in Richtung der Normalabstandslinie 16c horizontal ausgerichtet werden. Danach wird der Sensorträger 45 im Dreifuss 1 entriegelt, um 120°, z.B. gegen den Uhrzeigersinn, umgesetzt und wieder verriegelt. Durch Drehen der dritten Stellschraube 17c kann der Dreifuss 1 auch noch in Richtung der Normalabstandslinie 16a horizontiert werden. Da keine relevanten Interdependenzen zwischen den zwei Horizontiervorgängen vorhanden sind, ist der Dreifuss 1 damit horizontiert. Weist die Libellenblase 37c auch nach einem erneuten Entriegeln, Umsetzen um 120° in der gleichen Richtung und Verriegeln des Sensorträgers 45 keine Exzentrizität auf, so ist die korrekte Horizontierung des Dreifusses 1, sowie die korrekte Einbaujustierung der Röhrenlibelle 36c, verifiziert.

Mit einem erfindungsgemässen, nicht drehbarem Träger mit zwei Röhrenlibellen ist eine einfachere Horizontierung des Dreifusses 1, ohne ein Umsetzen des Sensorträgers möglich.

Figur 2b zeigt einen im Dreifuss 1 verriegelten Sensorträger 46, der sich nur durch die zusätzliche Anbringung einer zweiten Röhrenlibelle 36a vom Sensorträger 45 (in Figur 2a) unterscheidet. Da die zweite Libellenachse 35a im Gegensatz zum Stand der Technik nicht senkrecht auf die erste Libellenachse 35c sondern vorteilhaft ebenfalls parallel zur Normalabstandslinie 16a zweier Stellschraubenachsen 15b, 15c ausgerichtet ist, ist ein horizontales Ausrichten der Röhrenlibelle 36c durch ein Drehen der Stellschraube 17a gleichzeitig mit einem davon praktisch unabhängigen horizontalen Ausrichten der Röhrenlibelle 36a durch ein Drehen der Stellschraube 17c möglich. Ist der Dreifuss 1 horizontiert, so kann mit einem Entriegeln, Umsetzen um 120° und Verriegeln des Sensorträgers 46 die korrekte Einbaujustierung der Röhrenlibellen 36a, 36c verifiziert werden.

Ist, wie bei einem in Figur 2c im Dreifuss 1 verriegelt gezeigten Sensorträger 47, noch eine dritte Röhrenlibelle 36b - vorteilhaft parallel zu einer dritten Normalabstandslinie 16b der Schraubenachsen 15a, 15c ausgerichtet - angebracht, kann auf den separaten Arbeitsschritt für eine Verifizierung der korrekten Einbaujustierung der drei Röhrenlibellen 36a, 36b, 36c verzichtet werden. Die zweidimensionale Kippwinkelinformation des Dreifusses 1 wird durch die drei Röhrenlibellen 36a, 36b, 36c redundant erfasst. Eine Eliminierung der Exzentrizitäten aller Libellenblasen 37a, 37b, 37c ist praktisch nur möglich, wenn der Dreifusses 1 horizontal ausgerichtet ist und alle drei Röhrenlibellen 36a, 36b, 36c eine korrekte Einbaujustierung aufweisen. Gelingt es, nur zwei Libellen horizontal auszurichten, so muss eine unkorrekte Einbaudejustierung einer oder mehrerer Libellen vorliegen. Mit Entriegeln, Umsetzen um 120° und Verriegeln des Sensorträgers 47 kann herausgefunden werden, welche Libellen davon betroffen ist (sind). Der Sensorträger 47 kann dann unter Verwendung der korrekt eingebauten Libellen für zentrierte Aufstellungen verwendet werden.

Sind die Libellenachsen 35a, 35b, 35c parallel zu den Normalabstandslinien 16a, 16b, 16c ausgerichtet, so wird die Kippwinkelinformation durch die Libellenblasen 37a, 37b, 37c so dargestellt, dass mit Hilfe von graphischen Symbolen, wie z.B. am Gehäuse 5 applizierte Drehrichtungspfeile 38 gegen den Uhrzeigersinn, eine einfache Handlungsanweisung für die Horizontierung des Dreifusses 1 möglich wird. Weisen zusätzlich die Stellschrauben 17a, 17b, 17c auch noch Pfeile 39 auf, so wird die Handlungsanweisung noch weiter verdeutlicht. Die Libellenblasen 37a, 37b, 37c weisen Exzentrizitäten in Richtung derjenigen Stellschrauben 17b, 17c auf, welche aufgrund der mechanischen Gegebenheiten eines Dreifusses 1 durch ein Verstellen gegen den Uhrzeigersinn eine Horizontierung des Dreifusses 1 herbeiführen. Da die Röhrenlibellen 36a, 36b, 36c rings um den Stehbolzen 24 herum angeordnet sind, ist ein Horizontieren des Dreifusses 1 aus jeder beliebigen Position rings um das Stativ möglich. Hierfür wird z.B. die Stellschraube 17c solange gegen den Uhrzeigersinn gedreht, bis die Libellenblase 37b zentrisch ist. Parallel dazu wird die Stellschraube 17b solange gegen den Uhrzeigersinn gedreht, bis auch die Libellenblase 37c zentrisch ist. Wird dabei auch die Libellenblase 37a zentriert, so weisen alle drei Röhrenlibellen 36a, 36b, 36c eine korrekte Einbaujustierung auf.

## Patentansprüche

1. Sensorträger (4, 45, 46, 47) für zentrierte Aufstellungen über einer einen Referenzpunkt (99) aufweisenden Referenzfläche (9), wobei der Sensorträger zur Aufnahme in einem an einer Plattform (1), wie beispielsweise einem Dreifuss eines geodätischen Instrumentenstativs, vorgesehenen Aufnahmeelement (11), wie beispielsweise einer Aufnahmebohrung, ein mit diesem Aufnahmeelement (11) zusammenwirkendes Gegenstück aufweist, mit einem Gehäuse (5) zur Aufnahme eines optischen Mittels (67) zum Sichtbarmachen eines Schnittpunktes dessen optischer Achse (6) mit der Referenzfläche (9), wobei dem Gehäuse (5) eine - als Gegenstück wirkende - erste Deckfläche (2), gegebenenfalls mit Elementen zum Feststellen (23) des Sensorträgers an der Plattform (1), und - gegebenenfalls mittelbar - Mittel (24) zur Aufnahme wenigstens eines Sensors, wie beispielsweise einer GPS-Antenne (8), zugeordnet sind, **dadurch gekennzeichnet, dass** die erste Deckfläche (2) in jeweils wenigstens zwei unterschiedlichen Positionen des Sensorträgers (4, 45, 46, 47) in bezug auf die Plattform (1) mit dem Aufnahmeelement (11) formpassend zusammenwirkt und dass das optische Mittel (67) und die erste Deckfläche (2) mit dem Gehäuse (5) starr verbunden sind.

2. Sensorträger (4, 45, 46, 47) für zentrierte Aufstellungen über respektive unter einer einen Referenzpunkt (99, 100) aufweisenden Referenzfläche (9, 10) nach Anspruch 1, **dadurch gekennzeichnet, dass** dem Gehäuse (5) eine zweite Deckfläche (22) zugeordnet ist, die parallel zur ersten Deckfläche (2) ausgerichtet ist, wobei die zweite Deckfläche (22) in jeweils wenigstens zwei unterschiedlichen Positionen des Sensorträgers (4, 45, 46, 47) in bezug auf die Plattform (1) mit dem Aufnahmeelement (11) formpassend zusammenwirkt und die zweite Deckfläche (22) mit dem Gehäuse (5) starr verbindbar ist.

3. Sensorträger (4, 45, 46, 47) nach Anspruch 1 oder 2, **dadurch gekennzeichnet, dass** die Aussenform der ersten Deckfläche (2) und gegebenenfalls die Aussenform der zweiten Deckfläche (22) in jeweils wenigstens zwei unterschiedlichen Positionen des Sensorträgers (4, 45, 46, 47) in bezug auf die Plattform (1) mit der Innenform des Aufnahmeelementes (11) formpassend zusammenwirken.

4. Sensorträger (4, 45, 46, 47) nach einem der vorhergehenden Ansprüche, **dadurch gekennzeichnet, dass** die optische Achse (6) des optischen Mittels (67) mit der Achse des die erste Deckfläche (2) umschliessenden Zylinders und gegebenenfalls der Achse des die zweite Deckfläche (22) umschliessenden Zylinders zusammenfällt.

5. Sensorträger (4, 45, 46, 47) nach einem der vorhergehenden Ansprüche, **dadurch gekennzeichnet, dass** die Elemente (23) zum Feststellen des Sensorträgers an der Plattform wenigstens drei voneinander sowie zur optischen Achse gleichbeabstandete, verriegelbare Elemente aufweisen.

6. Sensorträger (4, 45, 46, 47) nach einem der vorhergehenden Ansprüche, **dadurch gekennzeichnet, dass** das optische Mittel (67) einen ein sichtbares Laserstrahlbündel (66) aussendenden Laserkollimator aufweist.

7. Sensorträger (4, 45, 46, 47) nach einem der vorhergehenden Ansprüche, **dadurch gekennzeichnet, dass** die optische Achse (6) des optischen Mittels (67) mit einer Zentralachse des Sensors (8) zusammenfällt.

8. Vorrichtung mit wenigstens zwei einer Röhrenlibelle entsprechend ausgebildeten Anzeigemittel (36a, 36c), zur Anzeige der von einer Horizontalebene abweichenden Kippwinkel einer auf - insbesondere drei - Stellmitteln (17a, 17b, 17c), wie beispielsweise den Stellschrauben eines Dreifusses eines geodätischen Instrumentenstativs, ruhenden Aufnahmeplattform (1), **dadurch gekennzeichnet, dass** die wenigstens zwei Anzeigemittel (36a, 36c) jeweils so angeordnet sind, dass die über das jeweilige Anzeigemittel verfügbare Kippwinkelinformation jeweils einer und nur einer Kipprichtung der - gegebenenfalls drei - Kipprichtungen entspricht.

9. Vorrichtung nach Anspruch 8, **dadurch gekennzeichnet, dass** den Stellmitteln (17a, 17b, 17c) Drehrichtungspfeile (38a, 38b, 38c, 39a, 39b, 39c) zur Anzeige der Korrekturrichtung zugeordnet sind.

10. Sensorträger (4, 45, 46, 47) nach einem der Ansprüche 1 bis 7, **dadurch gekennzeichnet, dass** er eine Vorrichtung nach Anspruch 8 oder 9 aufweist.
